# EUROPÄISCHE PATENTSCHRIFT

(11) **EP 2 240 350 B1**
(45) Veröffentlichungstag und Bekanntmachung des Hinweises auf die Patenterteilung: **27.06.2012**
(21) Anmeldenummer: 09780998.2
(22) Anmeldetag: 23.07.2009
(51) Int. Cl.: B60S 3/00

(54) **VERWENDUNG EINER RADLEITSCHIENE, FAHRZEUGWASCHANLAGE UND VERFAHREN ZUM MITTIGEN POSITIONIEREN EINES FAHRZEUGS**
USE OF A WHEEL GUIDE RAIL, CAR WASH SYSTEM AND METHOD FOR CENTRALLY POSITIONING A VEHICLE
UTILISATION D'UN RAIL GUIDE-ROUE, INSTALLATION DE LAVAGE DE VÉHICULES ET PROCÉDÉ DE POSITIONNEMENT CENTRÉ D'UN VÉHICULE

(30) Priorität: 24.07.2008 DE 102008034571
(43) Veröffentlichungstag der Anmeldung: 20.10.2010
(73) Patentinhaber: WashTec Holding GmbH, 86153 Augsburg (DE)
(72) Erfinder: WIMMER, Georg, 86444 Affing (DE)
(74) Vertreter: Charrier, Rapp & Liebau
(86) Internationale Anmeldenummer: PCT/EP2009/059517
(87) Internationale Veröffentlichungsnummer: WO 2010/010160

(56) Entgegenhaltungen:
- EP-A1- 1 614 602
- DE-A1- 2 104 049
- US-A- 3 596 241

## Beschreibung

Die Erfindung betrifft eine Verwendung einer Radleitschiene, eine Fahrzeugwaschanlage nach dem Oberbegriff des Anspruchs 10 sowie ein Verfahren zum mittigen Positionieren eines Fahrzeugs in einem Fahrbereich einer Fahrzeugwaschanlage nach dem Oberbegriff des Anspruchs 11.

Eine Eingangs genannte Radleitschiene geht aus der DE 21 04 049 A hervor. Die dortige Schleppvorrichtung für Fahrzeuge, insbesondere bei Waschanlagen, weist zwei Leitschienen auf, zwischen denen die Räder einer Fahrzeugseite hindurchbewegt werden. Die Leitschienen weisen einen im wesentlichen senkrecht auf dem Fahrzeugwaschanlagenboden angeordneten flachen Steg auf, an dessen oberen Ende ein im Querschnitt kreisrunder Längsstab angeordnet ist.

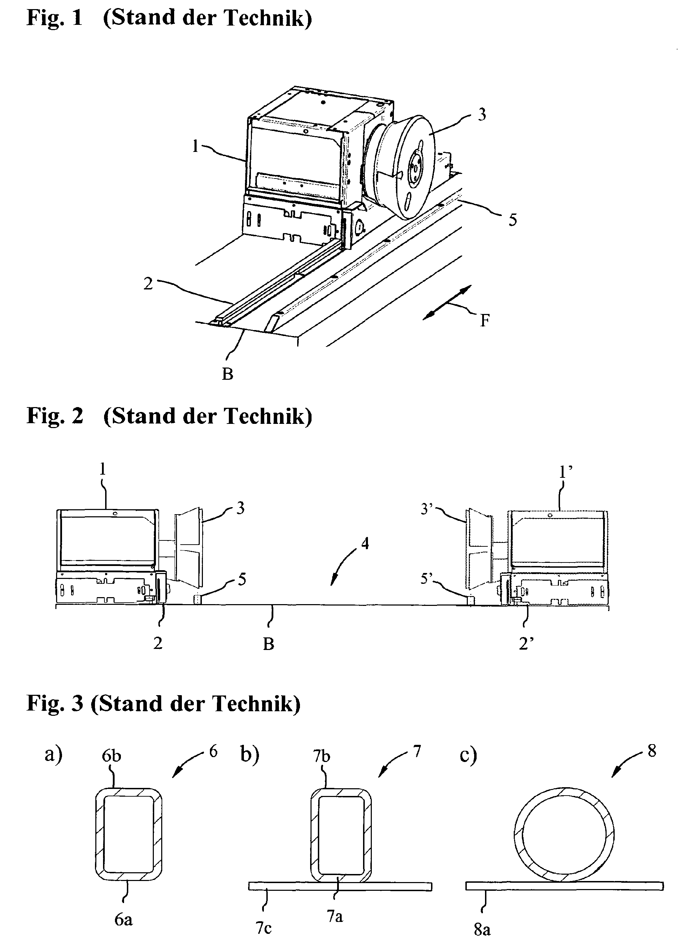

Weitere gattungsgemäße Radleitschienen für Fahrzeugwaschanlagen zeigen die Figuren 1 bis 5. In Fig. 1 ist ein linker Standfuß 1 einer nicht gezeigten Portalsäule eines verfahrbaren Waschportals einer Fahrzeugwaschanlage dargestellt, der in eine Fahrrichtung F an einer Fahrschiene 2 entlang auf einem Waschanlagenboden B verfahrbar ist. Am Standfuß 1 ist ein schematisch dargestellter Felgenwäscher 3 angeordnet, welcher in Richtung einer Felge eines zu waschenden Fahrzeugs weist. Um das zu waschende Fahrzeug möglichst mittig bezüglich der in Fig. 2 durch die Standfüße angedeuteten Portalsäulen 1, 1' in einen Fahrbereich 4 der Fahrzeugwaschanlage einfahren zu können, sind neben den Fahrschienen 2, 2' zum Fahrbereich 4 hin versetzt Radleitschienen 5, 5' am Boden der Fahrzeugwaschanlage befestigt. Wie insbesondere aus Fig. 2 hervorgeht, begrenzen die beiden Radleitschienen und 5 und 5' den Fahrbereich 4, zwischen dem sich die Räder eines zu waschenden Fahrzeuges bewegen sollen.

Beispiele für Querschnitte von bekannten Radleitschienen zeigt die Fig. 3. Eine in Fig. 3 a) dargestellte Radleitschiene 6 besteht aus einem rechteckförmigen Stahlhohlprofil, wobei die Kanten leicht abgerundeten sind. In einem Boden 6a und einer Stirnseite 6b der Radleitschiene 6 sind Durchgangsbohrungen in bestimmten Abständen eingebracht, durch welche die Radleitschiene 6 am Waschanlagenboden B verschraubt werden kann. Eine weitere bekannte Radleitschiene 7 zeigt Fig. 3 b). Dort wurde die Radleitschiene aus Fig. 3a auf ein Bodenblech bzw. Bodenschwellen 7c geschweißt, so dass keine Durchgangsbohrungen in einer Stirnseite 7b und einem Boden 7a der Radleitschiene 7 notwendig sind. Die Radleitschiene 7 wird dann durch Verschrauben des Bodenblechs bzw. der Bodenschwellen 7c am Waschanlagenboden B befestigt. Auch eine in Fig. 3 c) gezeigte bekannte Radleitschiene 8 weist ein Bodenblech bzw. Bodenschwellen 8a zum Befestigen am Waschanlagenboden B auf, während das Führungsteil der Radleitschiene 8 aus einem im Querschnitt kreisringförmigen Stahlrohr gefertigt ist.

Die bekannten Radleitschienen 5, 5' dienen dazu, beim Einfahren des Fahrzeugs sicherzustellen, dass der Fahrer dies möglichst mittig im Bezug auf die seitlichen Behandlungseinrichtungen positioniert, um bei seitlich am Fahrzeug angreifenden Behandlungseinrichtungen den möglichst gleichen Verfahrweg zu haben. So können beispielsweise die in Fig. 2 angedeuteten Radwäscher 3 und 3' von der zeichnerisch dargestellten fahrzeugfernen Stellung in die in Fig. 2 nicht gezeigten ausgefahrenen Stellung zum Waschen der Felgen ausgefahren werden. Um hierbei ein gutes Waschergebnis zu erzielen, ist es wünschenswert, beide mit etwa dem gleichen Anpressdruck an die Felgen anzupressen, was vor allem dann gut gelingt, wenn das Fahrzeug exakt mittig gegenüber dem Portalsäulen 1, 1' positioniert ist. Eine nicht mittige Position des Fahrzeugs könnte dazu führen, dass Fahrwege bzw. Reichweiten von Behandlungsaggregaten nicht ausreichen und es deshalb zu ungenügender Reinigung des Fahrzeugs kommt. Zudem sollen die Radleitschienen 5 und 5' sicherstellen, dass das Fahrzeug bei einer Überfahrt des verfahrbaren Waschportals nicht in einem Bereich steht, an dem eine Kollision mit den Behandlungsaggregaten oder sonstigen Teilen des Waschportals zu befürchten ist, beispielsweise Beschädigungen der Außenspiegel.

Eine gattungsgemäße Verwendung einer Radleitschiene ist aus dem Dokument US-B-3 596 241 bekannt.

Um diese Führungsfunktion zu gewährleisten, müssen die Radleitschienen 5, 5' so hoch sein, dass der Fahrer des einfahrenden Fahrzeugs ein evtl. Anfahren oder auch Überfahren einer Radleitschiene 5, 5' bemerkt, um dann Gegenlenken zu können. Dies stellt bei kleinen, leichten Fahrzeugen mit kleinen Rädern kein Problem dar, da dort ein Kontakt mit den üblicherweise 60 mm hohen, im Querschnitt rechteckigen Radleitschienen 5, 5' ohne weiteres bemerkt wird. Es gibt jedoch zunehmend große, schwere Fahrzeuge mit großer Fahrzeugbereite und großem Rad- bzw. Felgendurchmesser, beispielsweise 21 "-Felgen bei Sportwagen, Geländefahrzeugen oder sogenannten SUV-Fahrzeugen. Bei diesen Fahrzeugen wird ein Anfahren oder Überfahren der Radleitschienen 5, 5' aufgrund der Reifengröße und des hohen Fahrzeuggewichts vom Fahrer oft nicht bemerkt, so dass die Fahrzeuge oft außermittig im Fahrbereich 4 oder sogar auf den Radleitschienen 5, 5' zu stehen kommen. Hierdurch kommt es dann beim Überfahren mit dem Waschportal oft zu Beschädigungen herausstehender Fahrzeugteile, beispielsweise des Außenspiegels, auf der betreffenden Fahrzeugseite. Zudem wird das Reinigungsergebnis verschlechtert, da das Fahrzeug auf seiner anderen Fahrzeugseite zu weit von den Behandlungsaggregaten entfernt steht. Hinzu kommt, dass derartig große Fahrzeuge oft eine so große Spurbreite und somit Radaußenabstände haben, dass bei alten oder schmalen Fahrzeugwaschanlagen die Radleitschienen zu nah beieinander stehen und immer an- bzw. überfahren werden.

Um auch bei derartig großen Fahrzeugen die Berührung der Radleitschienen 5, 5' erkennen zu können, könnte in einem ersten Ansatz die Höhe der Radleitschiene vergrößert werden. Dies bringt jedoch den Nachteil mit sich, dass bei Fahrzeugen mit kleinen Reifen oder Niederquerschnittsreifen nicht nur der Gummireifen, sondern auch die Felge selbst an den üblicherweise aus Stahl bestehenden Radleitschienen 5, 5' anschlagen und hierbei beschädigt werden. Besonders bei oben genannten großen Fahrzeugen werden aufgrund des großen Felgendurchmesser oftmals Niederquerschnittsreifen verwendet, so dass in Verbindung mit der großen Fahrzeugbreite derartige Fahrzeuge bereits jetzt überproportional oft mit ihren in der Regel teueren Felgen an die Radleitschienen anschlagen. Die Beschädigung derart teurer Felgen ist für den Betreiber der Fahrzeugwaschanlage aufgrund der hohen Schadensersatzleistungen von großem Nachteil. Durch höhere Radleitschienen würden diese Fälle noch vermehrt.

Um diesen Nachteil, vor allem bei Niederquerschnittsreifen, zu vermeiden, wäre ein zweiter Lösungsansatz, die Radleitschienen niedriger auszuführen. Dies führt aber dazu, dass ein Anfahren oder Überfahren der Radleitschienen gerade von diesen großen Fahrzeugen nicht mehr bemerkt wird, so dass kein gutes Reinigungsergebnis erzielt wird und zudem Beschädigungen anderer Fahrzeugteile oder Behandlungsaggregate der Waschanlage zu befürchten sind.

Eine in US 3 596 241 offenbarte Fahrzeugwaschanlage weist aus Rohren bestehende Radleitschiene mit daran angeordneten Schaltarmen zur Detektion der Fahrzeugreifen auf. Die Schaltarme sind hierbei auf der fahrzeugfernen Außenseite des Rohrs fest montiert und reichen durch runde Öffnungen in den Rohren auf die fahrzeugnahe Seite. Sowohl die Rohre als auch die Schaltarme sind aus elektrisch leitendem Material und mit einer Schaltanzeige verbunden. Im Normalzustand berühren die Schaltarme die Rohre nicht und reichen auch nicht in den vorgegebenen Fahrbereich des Fahrzeugs. Fährt das Fahrzeug außerhalb des Fahrbereichs, verbiegt ein Rad des Fahrzeugs einen der Schaltarme, der dann an seine Öffnung anschlägt. Hierdurch wir ein elektrischer Schaltkreis geschlossen und ein entsprechendes Signal an einer Anzeige angezeigt. Diese Ausführung weist den Nachteil auf, dass die Schaltarme aufgrund ihrer Funktionsweise zwangsweise nach außen und in den Fahrbereich ragen. Dabei besteht die Gefahr des unbeabsichtigten Auslösens, beispielsweise durch Gegenstände im Fahrbereich, die die Schaltarme verbiegen oder durch Kurzschließen der offenliegenden Kontakt (Rohre und Schaltarme) des Schaltkreises. Weiter besteht die Gefahr von Beschädigung der Schaltarme durch an- oder darüberfahrende Fahrzeuge. Zudem besteht für die Bediener oder die Benutzer der Anlage die Gefahr eines Stromschlags aufgrund der offenliegenden Kontakte. Auch ist dort keine Messung des Abstands möglich, denn die Schaltarme bewirken lediglich ein Ein- oder Ausschalten des Signals. Die Schaltarme ermöglichen vielmehr nur die Detektion, ob ein Fahrzeug an irgendeiner Stelle der Radleitschienen zu nahe an der Radleitschiene stehen, denn bereits das Auslösen eines Schaltarms löst das Anzeigesignal aus, eine Feststellung eines speziellen Schaltarms von mehreren auslösenden Schaltarmen ist nicht möglich.

Die EP 1 614 602 A1 offenbart eine Vorrichtung zur Messung von Zustandsdaten an einem rollenden Radsatz eines schicncngcbundenen Fahrzeugs, wobei in einem Schienenkopf Abstandssensoren vorgesehen sind, mit denen das Profil der horizontalen Lauffläche und der vertikalen Lauffläche des Schienenfahrzeugrades abgetastet werden können. Zur Abtastung der Vertikalfläche des Schienenfahrzeugrades ist in einer Bohrung in der gegenüberliegenden vertikalen Lauffläche des Schienenkopfes ein induktiver Abstandssensor A12 vorgeschen, welcher den Abstand zwischen dcr Spurkranzschulter und der ihr gegenüberliegenden vertikalen Schienenkopffläche misst. Durch eine zusätzliche Messung mit einem weiteren axial montierten Abstandssensor kann aus dem bekannten Abstand zwischen den beiden Abstandssensoren die Spurkranzdicke berechnet und mit einem vorgegebenen bekannten Sollwert verglichen werden. Als Ergebnis kann sowohl die Spurkranzdicke, eine unzulässige Spurkranzdicke oder die Beschädigung der Spurkranzschultcr ermittelt werden. Einen Hinweis, diese Vorrichtung zur Messung an einem rollenden Radsatz eines schicncngcbundenen Fahrzeugs in einer Fahrzeugwaschanlage einzusetzen, ist dort nicht angegeben.

Es ist deshalb Aufgabe der vorliegenden Erfindung, die oben genannten Nachteile zu überwinden und eine Verwendung einer Radleitschiene, eine Fahrzeugwaschanlage sowie ein Verfahren zum mittigen Positionieren eines Fahrzeugs in einem Fahrbereich einer Fahrzeugwaschanlage bereit zu stellen, die ein sicheres und beschädigungsfreies Behandeln und Reinigen von Fahrzeugen ermöglichen. Insbesondere soll die Erfindung einerseits eine Beschädigung von Fahrzeugteilen des zu waschenden Fahrzeugs, insbesondere von Reifen oder Reifenfelgen, zuverlässig verhindern und andererseits ein mittiges Einfahren und Positionieren des Fahrzeugs, insbesondere eines sehr breiten Fahrzeugs, in die Fahrzeugwaschanlage ermöglichen.

Diese Aufgabe erlöst die Erfindung durch eine Verwendung einer Radleitschiene mit den Merkmalen des Anspruchs 1, eine Fahrzeugwaschanlage mit den Merkmalen des Anspruchs 10 sowie ein Verfahren zum mittigen Positionieren eines Fahrzeugs in einem Fahrbereich einer Fahrzeugwaschanlage mit den Merkmalen des Anspruchs 11. Vorteilhafte Ausgestaltungen und zweckmäßige Weiterbildungen der Erfindung sind in den Unteransprüchen angegeben.

Die erfindungsgemäß verwendete Radleitschiene ist dadurch gekennzeichnet, dass in der Radleitschiene mindestens ein Abstandssensor zum Messen des Abstands von Radleitschiene zu einer Radaußenseite und/oder Fahrzeugseite vorgesehen ist. Hierdurch kann eine Abweichung von einer mittigen Positionierung des Fahrzeugs schnell und einfach detektiert werden und eine Anzeige an den Fahrer des Fahrzeugs ausgegeben werden, dass er gegenlenken muss, um wieder in die mittige Position zu gelangen.

In einer bevorzugten Ausführung sind die Abstandssensoren berührungslose Sensoren, beispielsweise Ultraschallsensoren, welche eine kompakte und gegen Beschädigungen der Sensoren unempfindliche Bauweise der Radleitschienen ermöglichen.

Um den oder die Abstandssensoren in der Radleitschiene anordnen zu können, sind in einer dem Fahrbereich zugewandten Radleitflanke eine oder mehrere voneinander beabstandete Messöffnungen für den oder die Abstandssensoren vorgesehen sind. Die Messöffnungen sind vorteilhafterweise zur Halterung des oder der Abstandssensoren ausgebildet. Hierdurch lassen sich die Abstandssensoren in der Radleitschiene versenkt anordnen, um eine Beschädigung der Sensoren zu verhindern.

Um einen zusätzlichen Schutz für empfindliche Felgen wie auch den oder die Abstandssensoren vorzusehen, kann auf der Radleitflanke eine Abdeckung aus Kunststoff oder Gummi, vorzugweise Hartgummi, angeordnet sein, wobei die Abdeckung eine oder mehrere voneinander beabstandete, mit den Messöffnungen der Radleitflanke fluchtende Öffnungen aufweist.

Fertigungstechnisch vorteilhaft kann die verwendete Radleitschiene aus einem länglichen Hohlprofilmaterial gebildet sein, vorzugsweise aus Stahlhohlprofil. Darin lassen sich einfach der oder die Abstandssensoren versenkt anordnen und die zugehörigen Messöffnungen einbringen.

Eine alternative, fertigungstechnisch vorteilhafte Radleitschiene kann aus einem Vollmaterial aus Kunststoff oder Gummi, vorzugweise Hartgummi, gebildet sein, wodurch Beschädigungen empfindlicher Felgen verhindert werden. Um bei dieser Ausführung die Stabilität der Radleitschiene zu erhöhen, kann das Vollmaterial bodenseitig und an einer der Radleitflanke gegenüberliegenden Maschinenflanke mit einem angewinkelten Längsträger, vorzugsweise aus Metall, verstärkt sein, der in einer bevorzugten Ausführung L-förmig angewinkelt ist.

Bei einer vorteilhaften Ausführung der Erfindung kann ein oberes Ende der Radleitflanke so ausgebildet ist, dass sie im eingebauten Zustand der Radleitschiene vom Fahrbereich weg geneigt sein. Hierdurch kann ein großes Messfenster für die Abstandssensoren geschaffen werden kann. Hierdurch wird beim Anfahren der Radleitschiene mit dem Reifen zuerst der untere Bereich der Radleitflanke berührt, während der obere, weg geneigte Bereich der Radleitflanke noch ausreichend weit von Reifen und Felge des Fahrzeugs entfernt ist, so dass eine Beschädigung der Felge selbst bei stärkerem Anfahren und geringem Reifenquerschnitt sicher vermieden wird.

Ein zwischen der Radleitflanke und einer senkrecht auf dem Waschanlagenboden und parallel zur Fahrrichtung, also parallel zur Radleitschiene verlaufenden Vertikalen gebildeter, vom Fahrbereich weg geneigter Neigungswinkel liegt bevorzugt zwischen 5° und 30°. Bei kleineren Neigungswinkeln kann ein Anschlagen der Felge nicht sicher verhindert werden und bei größeren Neigungswinkeln ist die Radleitflanke zu flach, so dass das Anfahren bzw. Überfahren vom Fahrer nicht mehr zuverlässig bemerkt werden kann.

Erfindungsgemäß verwendete Radleitschienen werden bevorzugt in einer erfindungsgemäßen Fahrzeugwaschanlage verwendet. Bei dieser Fahrzeugwaschanlage kann der Abstand der Radleitschienen voneinander quer zur Fahrrichtung vorteilhaft größer als ein vorgegebener maximaler Radabstand sein. Die Radleitflanken der Radleitschienen können vorteilhaft zum Fahrbereich hin weisen, sind also auf der Seite der Fahrzeugräder angeordnet.

Hierdurch wird vorteilhaft ein Verfahren zum mittigen Positionieren eines Fahrzeugs in einem Fahrbereich einer erfindungsgemäßen Fahrzeugwaschanlage ermöglicht, das gekennzeichnet ist durch die folgenden Schritte: a) beidseitiges Messen des Abstandes zwischen Radleitschienen und Rädern und/oder Fahrzeugseiten des Fahrzeugs während des Einfahrens des Fahrzeugs in den Fahrbereich, b) Vergleichen des von der linken Radleitschiene gemessenen linken Messabstands mit dem von der rechten Radleitschiene gemessenen rechten Messabstand, c) Ausgeben einer ersten Richtungskorrekturanzeige, wenn der gemessene rechte Messabstand größer als der linke Messabstand ist, oder d) Ausgeben einer zweiten Richtungskorrekturanzeige, wenn der linke Messabstand größer als der rechte Messabstand ist. Bei einem Unterschied zwischen rechtem und linkem Messabstand, die kleiner als ein vorgegebener Toleranzbereich ist, kann in Schritt c) oder Schritt d) vorteilhafterweise keine Richtungskorrekturanzeige und/oder eine Richtungsanzeige ausgegeben werden. Hierdurch wird der Fahrer nicht durch häufig wechselnde Richtungskorrekturanzeigen verwirrt bzw. angezeigt, dass das Fahrzeug mittig im Fahrbereich steht und er nicht gegensteuern muss.

Die Abstände zwischen den Radleitschienen und Rädern und/oder Fahrzeugseiten werden vorteilhaft durch die Abstandssensoren in den Radleitschienen gemessen. In einer vorteilhaften Fortbildung des Verfahrens wird aus den gemessenen Messabständen eine Längsposition des Fahrzeugs ermittelt. Insbesondere wenn mehrere Abstandssensoren über die Länge der Radleitschienen verteilt sind, kann detektier werden, ob ein Fahrzeug den bereits am Abstandssensor vorbeigefahren ist oder nicht. Hierdurch erhält man zusätzlich zum seitlichen Abstand des Fahrzeugs auch Informationen zu seiner Längsposition in der Waschanlage. Vorteilhaft kann diese Information dazu verwendet werden, ein Weiterfahrsignal auszugeben, wenn das Fahrzeug eine vorgegebene Längsposition noch nicht erreicht hat, und/oder ein Stoppsignal auszugeben, wenn das Fahrzeug die vorgegebene Längsposition erreicht hat, und/oder ein Rückfahrsignal auszugeben, wenn das Fahrzeug die vorgegebene Längsposition überfahren hat. Somit kann das Fahrzeug in eine Wunschposition bezüglich der Waschanlage und der Behandlungsaggregate gebracht werden, ohne zusätzlichen Messaufwand betreiben zu müssen.

Weitere Besonderheiten und Vorzüge der Erfindung ergeben sich aus der folgenden Beschreibung von bevorzugten Ausführungsbeispielen anhand der Zeichnungen. Es zeigen:
- Fig. 1: eine schematische dreidimensionale Darstellung eines Ausschnitts einer bekannten Fahrzeugwaschanlage mit einem verfahrenbaren Waschportal;
- Fig. 2: eine schematische Vorderansicht eines weiteren Ausschnitts der Fahrzeugwaschanlage aus Fig. 1;
- Fig. 3: einen Querschnitt von drei bekannten Radleitschienen;
- Fig. 4: eine schematische dreidimensionale Darstellung eines Ausschnitts einer erfindungsgemäßen Fahrzeugwaschanlage mit einem verfahrenbaren Waschportal;
- Fig. 5: eine schematische Vorderansicht eines weiteren Ausschnitts der Fahrzeugwaschanlage aus Fig. 4;
- Fig. 6: einen Querschnitt einer erfindungsgemäß verwendeten Radleitschiene gemäß einem ersten Ausführungsbeispiel;
- Fig. 7: einen Querschnitt durch ein zweites Ausführungsbeispiel einer erfindungsgemäß verwendeten Radleitschiene;
- Fig. 8: einen Querschnitt eines dritten Ausführungsbeispiels einer erfindungsgemäß verwendeten Radleitschiene;
- Fig. 9: einen Querschnitt eines vierten Ausfiihrungsbeispiels einer erfindungsgemäß verwendeten Radleitschiene;
- Fig. 10: eine schematische Draufsicht auf einen Teil einer erfindungsgemäßen Fahrzeugwaschanlage nach Fig. 4 und 5.

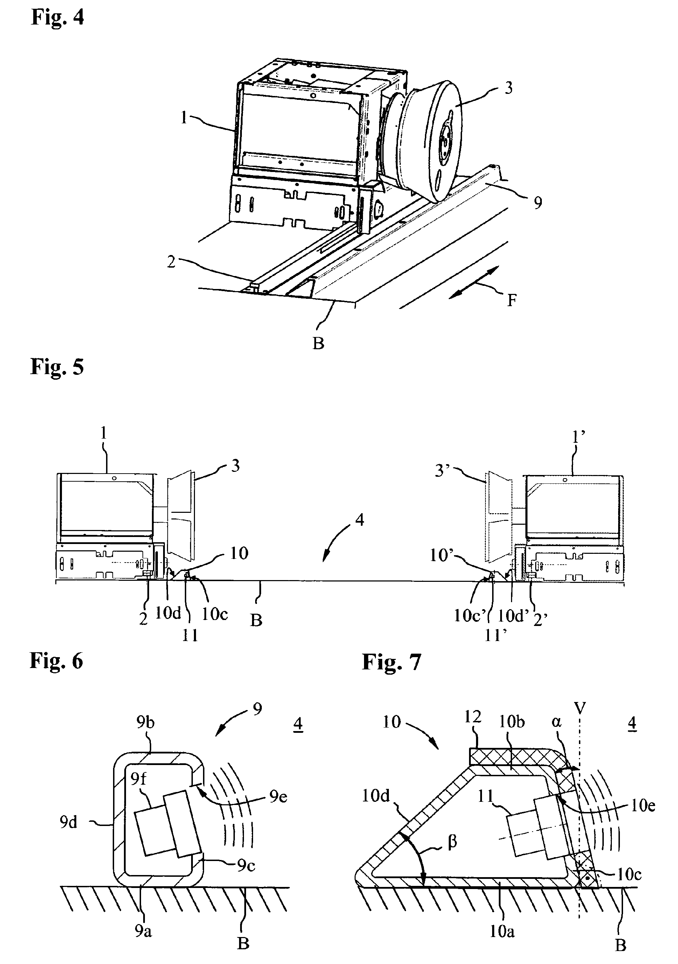

In den Fig. 6 bis 9 sind Querschnitte der erfindungsgemäß verwendeten Radleitschienen im eingebauten Zustand gezeigt. Die Radleitschienen weisen eine an die Fahrzeugwaschanlage angepasst Längsausdehnung auf, wie exemplarisch in Fig. 4 angedeutet. Die erfindungsgemäß verwendeten Radleitschienen weisen in den Zeichnungen nicht dargestellte Befestigungsmittel auf, beispielsweise Bohrungen in ihren Bodenbereichen, mittels derer sie an den Waschanlagenboden angeschraubt werden können. Eine Fahrrichtung F eines in der Fahrzeugwaschanlage zu waschenden Fahrzeugs verläuft senkrecht zur Zeichnungsebene der Fig. 6 bis 9.

Eine in Fig. 6 gezeigte Ausführung einer erfindungsgemäß verwendeten Radleitschiene 9 besteht aus einem länglichen Hohlprofilmaterial aus stabilem Material, hier Stahl. Ein Boden 9a und eine Stirnseite 9b verlaufen koplanar und im wesentlichen parallel zum Waschanlagenboden B. Eine Radleitflanke 9c und eine Maschinenflanke 9d schließen einen im wesentlichen 90°-Winkel mit Boden 9a und Stirnseite 9b ein. Um eine Beschädigung des Reifens beim An- oder Auffahren auf die Radleitschiene 9 zu verringern, ist die Kante zwischen Stirnseite 9b und Radleitflanke 9d abgerundet. In der Radleitflanke 9c eine Messöffnung 9e vorgesehen, in welcher eine Abstandssensor 9f in das Hohlprofil der Radleitschiene 9 versenkt ist. Der Abstandssensor 9f dient dazu, den Abstand zum Rad bzw. zur Fahrzeugseite eines vorbeifahrenden Fahrzeugs zu messen, wie weiter unten ausführlich beschrieben. Der Abstandssensor 9f ist ein Ultraschallsensor, es können jedoch gleichermaßen andere geeignete Sensortypen, beispielsweise Infrarot- oder Radarsensoren verwendet werden. Der Abstandssensor 9f ist über in Fig. 6 nicht dargestellte Verbindungsleitungen mit einer Steuerung der Fahrzeugwaschanlage verbunden, welche seine Messsignale, also gemessene Messabstände, auswertet. Vorteilhaft sind mehrere solche Abstandssensoren 9f über die Länge der Radleitschiene 9 verteilt angeordnet, bevorzugt in gleichmäßigen Abständen.

Eine in Fig. 7 gezeigten Ausführung der Erfindung zeigt eine Radleitschiene 10 mit einem trapezförmigen Querschnitt. Der Boden 10a ist breiter als die Stirnseite 10b, so dass sich eine Radleitflanke 10c vom Boden 10a zur Stirnseite 10b hin vom Fahrbereich 4 weg neigt. Ein Neigungswinkel α zwischen Radleitflanke 10c und einer senkrecht auf dem Waschanlagenboden B und parallel zur Fahrrichtung F bzw. eingebauten Radleitschiene 10 verlaufenden Vertikalen V beträgt vorliegend 14°. Wird der Neigungswinkel α steiler als 5° zur Vertikalen V gewählt, so besteht nach wie vor die Gefahr, dass die Felge eines Fahrzeugs an der Stirnseite 10b oder der Kante zwischen Stirnseite 10b und Radleitflanke 10d anschlägt und dabei beschädigt wird. Wird die Neigung flacher als 30° zur Vertikalen V gewählt, so bemerkt der Fahrer eines einfahrenden Fahrzeugs das An- bzw. Überfahren an der Radleitschiene 10 nicht mehr, insbesondere bei großen, schweren Fahrzeugen mit großen Reifendurchmessern. Auf einer Radleitflanke 10c und auf einer Stirnseite 10b ist eine Abdeckung 12 aus einem elastischen, stabilen Vollmaterial, hier Hartgummi vorgesehen, um die Felgen beim Anfahren der Radleitflanke vor Beschädigung zu schützen. Weiter weist die Radleitflanke 10c eine Messöffnung 10e auf, welche auch fluchtend durch die Abdeckung 12 reicht. In der Messöffnung 10e ist ein Abstandssensor 11 an der Radleitflanke 10c befestigt und in das Hohlprofil der Radleitschiene 10 versenkt. Durch die geneigte Radleitflanke 11c kann besonders gut ein großes Messfenster für den Abstandssensoren 11 bereitgestellt werden, so dass der Abstandssensor 11 auch in einem sehr steilen Winkel nach oben "sehen" kann, was bei einer senkrechten Radleitflanke wie in Fig. 6 dargestellt so nicht möglich wäre.

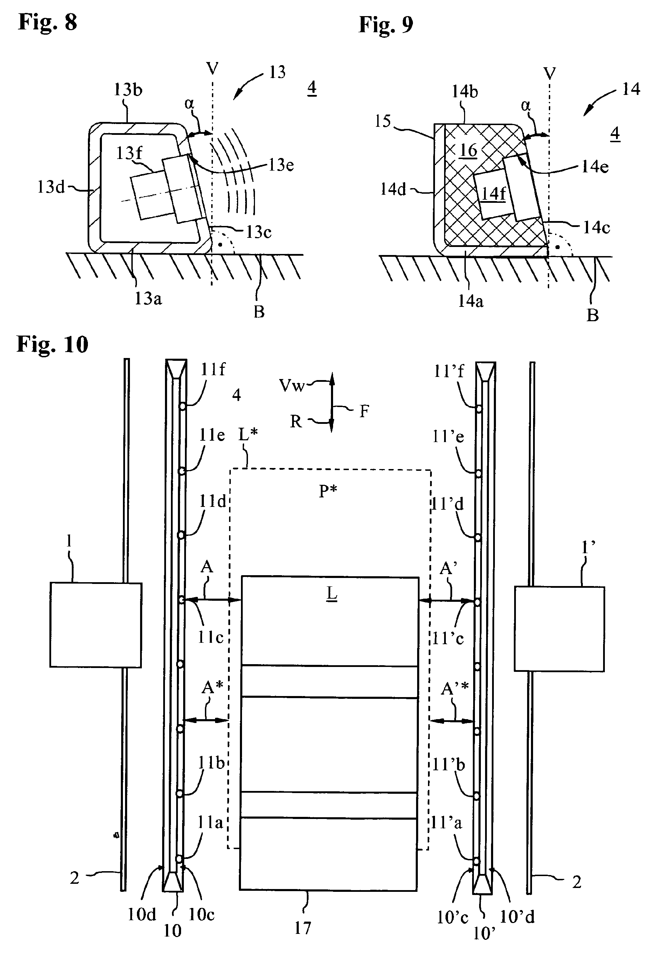

Die in Fig. 8 gezeigte Ausführung der Erfindung unterscheidet sich von der in Fig. 6 dadurch, dass eine Radleitflanke 13c entsprechend der in Fig. 7 gezeigten Ausführung vom Fahrbereich 4 um einen Neigungswinkel α weg geneigt ist. Hierdurch ergeben sich die bei Fig. 7 genannten Vorteile. Insbesondere kann der Abstandssensor 13f in der Messöffnung sehr weit nach außen versetzt werden, so dass sein Messbereich voll ausgenützt werden kann und nicht durch die obere Kante der Messöffnung 13e beeinträchtigt wird. Diese Ausführung stellt also gleichzeitig einen guten Schutz gegen Beschädigungen des Abstandssensors 13f und der Felge eines Fahrzeugs beim Anfahren er Radleitschiene 13 dar und bietet dennoch eine gute Ausnutzung des möglichen Messfelds des Abstandssensors 13f.

Die in Fig. 9 gezeigte weitere Ausführung einer erfindungsgemäß verwendeten Radleitschiene 14 weist im wesentlichen gleiche Außenkontur wie die in Fig. 8 dargestellte Ausführung auf. Die Radleitschiene 14 unterscheidet sich jedoch dadurch von der Radleitschiene 13, das sie aus einem im Querschnitt L-förmigen länglichen Metallträger 15 und einem daran angeordneten Vollmaterial 16 aus elastischem, stabile Gummi, vorzugsweise Hartgummi, mit dem in Fig. 9 gezeigten Querschnitt gefertigt ist. Hierbei bildet der Metallträger 15 einen Boden 14a und eine Maschinenflanke 14d der Radleitschiene aus, während das Vollmaterial 16 eine Stirnseite 14b sowie eine Radleitflanke 14d ausbildet. Diese Ausführung weist den Vorteil auf, dass aufgrund des zwar stabilen, jedoch gegenüber den aus Metall, z.B. Stahl oder Alu bestehenden Felgen weicheren Hartgummi-Vollmaterials 16 eine Beschädigung der Felgen sicher vermieden werden kann. Durch die Verstärkung des Hartgummi-Vollmaterials 16 durch den L-förmigen Stahlträger 15 wird zudem eine ausreichende Stabilität der Radleitschiene 14 gewährleistet. In die geneigte Radleitflanke 14c ist eine Messöffnung 14e eingebracht, in der ein Abstandssensor 14f vollständig versenkt ist. Diese Ausführung weist den Vorteil auf, dass aufgrund des zwar stabilen, jedoch gegenüber den aus Metall, z.B. Stahl oder Alu bestehenden Felgen weicheren Hartgummi-Vollmaterials 16 eine Beschädigung der Felgen sicher vermieden werden kann. Durch die Verstärkung des Hartgummi-Vollmaterials 16 durch den L-förmigen Stahlträger 15 wird zudem eine ausreichende Stabilität der Radleitschiene 14 gewährleistet. Der vollständig in die Radleitschiene 14 versenkte Abstandssensor 14f ist ebenfalls vorteilhaft gegen Beschädigungen von außen, besonders beim Anfahren durch den Fahrzeugreifen geschützt.

Eine Fahrzeugwaschanlage mit einer erfindungsgemäß verwendeten Radleitschiene zeigen Fig. 4 und 5. Einziger Unterschied zu der in Fig. 1 und 2 gezeigten Fahrzeugwaschanlage ist, dass im Ausführungsbeispiel nach Fig. 4 und 5 eine Radleitschiene 10 bzw. 10' gemäß Fig. 7 verwendet wird, wobei aus Gründen der Übersichtlichkeit die Abdeckung 12 nicht dargestellt ist. Anstelle der Radleitschiene 10 bzw. 10' können auch die anderen erfindungsgemäß verwendete Radleitschienen nach einem der vorangehenden Ausführungsbeispiele nach Fig. 6 bis 9 verwendet werden.

Durch die geneigten Radleitflanken 10c, 10c' kann der Fahrer eines im Fahrbereich 4 fahrenden Fahrzeugs sein Fahrzeug mittig positionieren, ohne beim Anfahren einer der Radleitflanken 10c, 10c' ein Beschädigung der Fahrzeugreifen und/oder -felgen befürchten zu müssen.

Die Funktionsweise der Abstandssensoren 11, 11' soll nun anhand Fig. 4, 5 und 10 erläutert werden. In den Radleitschienen 10, 10| sind eine Vielzahl von Abstandssensoren in gleichen Abständen voneinander angeordnet, wobei exemplarisch Abstandssensoren 11a-11e bzw. 11'a-11'e gekennzeichnet sind. Um optimale Abstände zu den Behandlungsaggregaten zu erhalten, sollte ein zu waschendes Fahrzeug 17 in der mittige Zielposition P* stehen, welche von den Radleitschienen 10, 10' seitlich durch Wunschabstände A*, A'* und nach vorne durch eine Wunschlängsposition L* definiert wird.

Während des Einfahrens des Fahrzeugs 17 in den Fahrbereich 4 in Vorwärtsrichtung Vw der Fahrrichtung F messen alle Abstandssensoren 11, 11' den Abstand der Fahrzeugräder des Fahrzeugs von der jeweiligen rechten bzw. linken Radleitschiene 10, 10'. Exemplarisch zeigt Fig. 10 den tatsächlichen Abstand A bzw. A' zwischen Fahrzeugreifen und Radleitschiene 10, 10' in Höhe des Abstandssensors 11c bzw. 11'c. Da nicht ohne größeren Aufwand ermittelt werden kann, ob die Abstandssensoren 11, 11' gerade den Abstand zum Reifen, Rad oder zur Fahrzeugseite messen, wird in einer Steuerung der Waschanlage die Differenz aus dem gemessenen Messabstand der Abstandssensoren 11 der linken Radleitschiene 10 und aus dem gemessenen Messabstand des jeweils gegenüberliegenden Abstandssensors 11' der rechten Radleitschiene 10' gebildet. Beispielsweise beträgt die Differenz von Abstandssensoren 11'c, 11c in Fig. 10 Null, da beide gleich groß sind. Solange die Differenz Null ist, der Messabstand beider Abstandssensoren 11, 11' also gleich groß ist, befindet sich das Fahrzeug in der gewünschten mittigen Position bezüglich der Radleitschienen 10, 10' innerhalb des Fahrbereichs 4. Weicht das Fahrzeug 17 jedoch nach rechts oder links von dieser mittigen Position ab, so verringert sich der Abstand zu einer der Radleitschienen 10 und der zur anderen Radleitschiene 10' vergrößert sich. Die Messabstände einander gegenüberliegender Abstandssensoren 11, 11' werden ungleich. Hierauf gibt die Steuerung an einer Anzeige der Waschanlage eine Richtungskorrekturanzeige aus, die dem Fahrer mitteilt, dass er zu weit auf einer Seite steht und gegenlenken muss, um das Fahrzeug in die andere Richtung und somit zu Mitte hin zu verfahren. Die Anzeige kann in Form von zwei Pfeilen gebildet sein, wobei der eine nach rechts und der andere nach links weist. Die Richtung, in welcher der Fahrer das Fahrzeug lenken soll, um wieder in die mittige Position zu gelangen, wird durch Beleuchtung des entsprechenden Pfeils angezeigt. Ist beispielsweise der Abstand A des linken Reifens zu linken Radleitschiene 10 geringer als der Abstand A' des rechten Reifens zur rechten Radleitschiene 10', befindet sich das Fahrzeug also zu weit links, so wird der rechte Pfeil aktiviert, und umgekehrt. Zudem wird bei korrekter, seitenmittiger Platzierung des Fahrzeugs eine Richtungsanzeige ausgegeben, z.B. einen geradeaus weisender Pfeil, welche dem Fahrer mitteilt, dass er mittig steht und nicht lenken muss. Um bei geringen, u.U. durch Messstörungen verursachten Abweichungen der zueinander gehörigen rechts- bzw. linksseitigen Messabstände voneinander ein ständiges Hin- und Herschalten zwischen den zugehörigen Richtungskorrekturanzeigen zu verhindern, welche den Fahrer nur verwirren würden, wird in diesem Fall die Ausgabe der entsprechenden Richtungskorrekturanzeige unterdrückt. Erst wenn der Unterschied zwischen rechtem und linkem Messabstand außerhalb des durch die Wunschabstände A*, A'* einstellbaren Toleranzbereichs gelangt, die Abstandsdifferenz sich also immer weiter vergrößert, wird die entsprechende Richtungskorrekturanzeige ausgegeben.

Gleichermaßen kann durch die Abstandssensoren 11, 11' der Radleitschienen 10, 10' die Längsposition L des Fahrzeugs 17 ermittelt werden, so dass eine gewünschte Längsposition L* erreicht werden kann. In Fig. 10 ist die gewünschte Längsposition L* erreicht, wenn die Fahrzeugfront in Höhe der Abstandssensoren 11e, 11'e gelangt. Solange die Abstandssensoren 11e, 11'e keinen Abstand messen, also kein Fahrzeug detektieren, wird dem Fahrer durch ein Weiterfahrsignal angezeigt, dass er also noch weiter in Vorwärtsrichtung Vw fahren soll, z.B. durch eine grüne Ampel. Sobald die Abstandssensoren 11e, 11'e jeweils eine Abstand messen, die Fahrzeugfront also die Abstandssensoren 11e, 11'e erreicht, wird dem Fahrer durch ein Stoppsignal angezeigt, dass er stehen bleiben soll, beispielsweise durch eine rote Ampel. Überfährt das Fahrzeug die gewünschte Längsposition L*, was vorteilhaft durch die Abstandssensoren 11f, 11'f detektiert wird, so wird dem Fahrer durch ein Rückfahrsignal angezeigt, dass er rückwärts fahren soll, bis das Fahrzeug die Abstandssensoren 11f, 11'f und 11e, 11'e freigibt.

Somit kann man während des Einfahrens sowohl Rückmeldung über die seitliche Position des Fahrzeugs als auch über seine Längsposition L erhalten. In einer vorteilhaften Ausführung der Erfindung wird aus den Messabständen eine Fahrzeugposition im Fahrbereich 4 bestimmt, welche relativ zu der Wunschposition P* des Fahrzeugs 17 angezeigt wird. Beispielsweise kann für die Wunschposition P* das in Fig. 10 gestrichelt angedeutete Rechteck in einem Display angezeigt werden, auf dem gleichzeitig die aktuell gemessene Position des Fahrzeugs 17 kontinuierlich angezeigt wird. Der Fahrer sieht somit, wie das Fahrzeug zu der Wunschposition P* steht und in welche Richtung er lenken bzw. fahren muss, um das Fahrzeug in die Wunschposition P* zu bekommen. Sobald das Fahrzeug 17 in der Wunschposition P* ist, kann am Display eine entsprechende Anzeige angezeigt werden, beispielsweise ein Blinken von angezeigter Wunschposition P* und Fahrzeugposition. Eine alternative und vorteilhafte Anzeige wäre es, die angezeigte Fahrzeugposition bis zum Erreichen der Wunschposition P* rot anzuzeigen, und dann die angezeigte Fahrzeugposition grün anzuzeigen.

## Patentansprüche

1. Verwendung einer Radleitschiene (9; 10; 13; 14) in einer Fahrzeugwaschanlage zur seitlichen Begrenzung eines Fahrbereichs (4) eines in der Fahrzeugwaschanlage zu behandelnden Fahrzeugs, dadurch gekennzeichneit, daß in der Radleitschiene (9; 10; 13; 14) mindestens ein Abstandssensor (9f; 11; 13f; 14f) zum Messen des Abstands von Radleitschiene (9; 10; 13; 14) zu einer Radaußenseite und/oder Fahrzeugseite vorgesehen ist.

2. Verwendung einer Radleitschiene (9; 10; 13; 14) nach Anspruch 1, **dadurch gekennzeichnet, dass** die Abstandssensoren berührungslos wirkende Sensoren, insbesondere Ultraschallsensoren sind.

3. Verwendung einer Radleitschiene (9; 10; 13; 14) nach einem der Ansprüche 1 oder 2, **dadurch gekennzeichnet, dass** in einer dem Fahrbereich (F) zugewandten Radleitflanke (9c; 10c; 13c; 14c) eine oder mehrere voneinander beabstandete Messöffnungen (9e; 10e; 13e; 14e) für den oder die Abstandssensoren (9f; 11; 13f; 14f) vorgesehen sind.

4. Verwendung einer Radleitschiene (9; 10; 13; 14) nach Anspruch 3, **dadurch gekennzeichnet, dass** die Messöffnungen (9e; 10e; 13e; 14e) zur Halterung des oder der Abstandssensoren (9f; 11; 13f; 14f) ausgebildet sind.

5. Verwendung einer Radleitschiene (9; 10; 13; 14) nach einem der Ansprüche 3 oder 4, **dadurch gekennzeichnet, dass** auf der Radleitflanke (10c) eine Abdeckung (12) aus Kunststoff oder Hartgummi angeordnet ist, wobei die Abdeckung eine oder mehrere voneinander beabstandete, mit den Messöffnungen (10e) der Radleitflanke (10c) fluchtende Öffnungen aufweist.

6. Verwendung einer Radleitschiene (9; 13) nach einem der Ansprüche 1 bis 5, **dadurch gekennzeichnet, dass** die Radleitschiene (9; 13) aus einem länglichen Hohlprofilmaterial oder aus einem Vollmaterial (16) aus Kunststoff oder Gummi gebildet ist.

7. Verwendung einer Radleitschiene nach Anspruch 6, **dadurch gekennzeichnet, dass** das Vollmaterial (16) bodenseitig und an einer der Radleitflanke (14c) gegenüberliegenden Maschinenflanke (14d) mit einem, insbesondere L-förmig, angewinkelten Längsträger (15) verstärkt ist.

8. Verwendung einer Radleitschiene (9; 10; 13; 14) nach einem der Ansprüche 3 bis 7, **dadurch gekennzeichnet, dass** ein oberes Ende der Radleitflanke (9c; 10c; 13c; 14c) so ausgebildet ist, dass sie im eingebauten Zustand der Radleitschiene (9; 10; 13; 14) vom Fahrbereich weg geneigt ist.

9. Verwendung einer Radleitschiene (9; 10; 13; 14) nach einem der voranstehenden Ansprüche, **dadurch gekennzeichnet, dass** der mindestens eine Abstandssensor (9f; 11; 13f; 14f) in der Radleitschiene (9; 10; 13; 14) versenkt ist.

10. Fahrzeugwaschanlage mit längs einer Fahrrichtung (F) für ein zu behandelndes Fahrzeug verfahrbaren Behandlungseinrichtungen (1, 1', 3, 3'), mit einem Paar am Waschanlagenboden (B) zwischen den Behandlungseinrichtungen (1, 1', 3, 3') in Fahrrichtung (F) verlaufenden und quer zur Fahrrichtung (F) voneinander beabstandet angeordneten Radleitschienen (10, 10'), welche einen Fahrbereich (4) für das Fahrzeug seitlich begrenzen, **dadurch gekennzeichnet, dass** die Radleitschienen (10, 10') ausgebildet sind wie die in einem der Ansprüche 1 bis 9 verwendete Radleitschiene (9; 10; 13; 14).

11. Verfahren zum mittigen Positionieren eines Fahrzeugs in einem Fahrbereich (4) einer Fahrzeugwaschanlage nach Anspruch 10, **gekennzeichnet durch** die folgenden Schritte:
a) beidseitiges Messen des Abstandes zwischen Radleitschienen (10, 10') und Rädern und/oder Fahrzeugseiten des Fahrzeugs während des Einfahrens des Fahrzeugs in den Fahrbereich (4),
b) Vergleichen eines von der linken Radleitschiene (18) gemessenen linken Messabstands mit einem von der rechten Radleitschiene (18') gemessenen rechten Messabstand,
c) Ausgeben einer ersten Richtungskorrekturanzeige, wenn der rechte Messabstand größer als der linke Messabstand ist, oder
d) Ausgeben einer zweiten Richtungskorrekturanzeige, wenn der linke Messabstand größer als der rechte Messabstand ist.

12. Verfahren nach Anspruch 11, **dadurch gekennzeichnet, dass** bei einem Unterschied zwischen rechtem und linkem Messabstand, die kleiner als ein vorgegebener Toleranzbereich ist, in Schritt c) oder Schritt d) keine Richtungskorrekturanzeige und/oder eine Richtungsanzeige ausgegeben wird.

13. Verfahren nach Anspruch 11 oder 12, **dadurch gekennzeichnet, dass** die Abstände zwischen Radleitschienen (10, 10') und Rädern und/oder Fahrzeugseiten durch die Abstandssensoren in den Radleitschienen (10, 10') gemessen werden.

14. Verfahren nach einem der Ansprüche 11 bis 13, **dadurch gekennzeichnet, dass** aus den Messabständen eine Längsposition (L) des Fahrzeugs ermittelt wird und/oder eine Fahrzeugposition im Fahrbereich (4) bestimmt wird und die Fahrzeugposition und eine Wunschposition (P*) des Fahrzeugs relativ zueinander angezeigt werden.

15. Verfahren nach Anspruch 14, **dadurch gekennzeichnet, dass** ein Weiterfahrsignal ausgegeben wird, wenn das Fahrzeug eine gewünschte Längsposition (L*) noch nicht erreicht hat, und/oder ein Stoppsignal ausgegeben wird, wenn das Fahrzeug die gewünschte Längsposition (L*) erreicht hat, und/oder ein Rückfahrsignal ausgegeben wird, wenn das Fahrzeug die gewünschte Längsposition (L*) überfahren hat.

## Claims

1. Use of a wheel guide rail (9; 10; 13; 14) in a vehicle washing installation for lateral delimitation of a driving area (4) of a vehicle to be treated in the vehicle washing installation, **characterised in that** at least one distance sensor (9f; 11; 13f; 14f) is provided in the wheel guide rail (9; 10; 13; 14) for measuring the distance from the wheel guide rail (9; 10; 13; 14) to a wheel outside and/or vehicle side.

2. Use of a wheel guide rail (9; 10; 13; 14) according to claim 1, **characterised in that** the distance sensors are contactless sensors, in particular ultrasound sensors.

3. Use of a wheel guide rail (9; 10; 13; 14) according to one of claims 1 or 2, **characterised in that** one or more mutually spaced measuring openings (9e; 10e; 13e; 14e) are provided in a wheel guide flank (9c; 10c; 13c; 14c) facing the driving area (F) for the distance sensor or sensors (9f; 11; 13f; 14f).

4. Use of a wheel guide rail (9; 10; 13; 14) according to claim 3, **characterised in that** the measuring openings (9e; 10e; 13e; 14e) are designed to hold the distance sensor or sensors (9f; 11; 13f; 14f).

5. Use of a wheel guide rail (9; 10; 13; 14) according to one of claims 3 or 4, **characterised in that** a cover (12) made of plastic or hard rubber is arranged on the wheel guide flank (10c), the cover exhibiting one or more mutually spaced openings aligning with the measuring openings (10e) of the wheel guide flank (10c).

6. Use of a wheel guide rail (9; 13) according to one of claims 1 to 5, **characterised in that** the wheel guide rail (9; 13) is formed of an elongated hollow profile material or of a solid material (16) consisting of plastic or rubber.

7. Use of a wheel guide rail according to claim 6, **characterised in that** on the bottom side and on a machine flank (14d) facing the wheel guide flank (14c) the solid material (16) is reinforced with an angled, in particular L-shaped longitudinal member (15).

8. Use of a wheel guide rail (9; 10; 13; 14) according to one of claims 3 to 7, **characterised in that** an upper end of the wheel guide flank (9c; 10c; 13c; 14c) is designed so that it is inclined away from the driving area when the wheel guide rail (9; 10; 13; 14) is installed.

9. Use of a wheel guide rail (9; 10; 13; 14) according to one of the preceding claims, **characterised in that** the at least one distance sensor (9f; 11; 13f; 14f) is recessed in the wheel guide rail (9; 10; 13; 14).

10. Vehicle washing installation with treatment devices (1, 1', 3, 3') able to travel longitudinally in a driving direction (F) for a vehicle to be treated, with a pair of wheel guide rails (10, 10') which are arranged on the floor (B) of the washing installation running in the driving direction (F) between the treatment devices (1, 1', 3, 3') and mutually spaced transversely to the driving direction (F) and which laterally delimit a driving area (4) for the vehicle, **characterised in that** the wheel guide rails (10, 10') are designed like the wheel guide rail (9; 10; 13; 14) used in one of claims 1 to 9.

11. Method for positioning a vehicle centrally in a driving area (4) of a vehicle washing installation according to claim 10, **characterised by** the following steps:
a) measurement of the distance between wheel guide rails (10, 10') and wheels and/or vehicle sides of the vehicle on both sides while the vehicle is driving into the driving area (4),
b) comparison of a measurement distance measured on the left from the left-hand wheel guide rail (18) with a measurement distance measured on the right from the right-hand wheel guide rail (18'),
c) emission of a first direction correcting indication when the measurement distance on the right is greater than the measurement distance on the left, or
d) emission of a second direction correcting indication when the measurement distance on the left is greater than the measurement distance on the right.

12. Method according to claim 11, **characterised in that** in the event of a difference between the measurement distance on the right and the left which is less than a predetermined tolerance range, no direction correcting indication and/or a direction indication is emitted in step c) or step d).

13. Method according to claim 11 or 12, **characterised in that** the distances between wheel guide rails (10, 10') and wheels and/or vehicle sides are measured by the distance sensors in the wheel guide rails (10, 10').

14. Method according to one of claims 11 to 13, **characterised in that** a longitudinal position (L) of the vehicle is determined from the measurement distances and/or a vehicle position in the driving area (4) is defined and the vehicle position and a desired position (P*) of the vehicle are indicated relative to one another.

15. Method according to claim 14, **characterised in that** a signal to continue is emitted as long as the vehicle has still not reached a desired longitudinal position (L*), and/or a stop signal is emitted when the vehicle has reached the desired longitudinal position (L*), and/or a reverse signal is emitted when the vehicle has overrun the desired longitudinal position (L*).

## Revendications

1. Utilisation d'un rail guide-roue (9 ; 10 ; 13 ; 14) dans une installation de lavage de voiture servant à délimiter latéralement une zone de conduite (4) d'un véhicule à traiter dans l'installation de lavage de véhicule, **caractérisée en ce qu'**au moins un capteur de distance (9f ; 11 ; 13f; 14f) servant à mesurer la distance entre le rail guide-roue (9 ; 10 ; 13 ; 14) et un côté extérieur de roue et/ou un côté de véhicule est prévu dans le rail guide-roue (9 ; 10 ; 13 ; 14).

2. Utilisation d'un rail guide-roue (9 ; 10 ; 13 ; 14) selon la revendication 1, **caractérisée en ce que** les capteurs de distance sont des capteurs ayant une action sans contact, en particulier des capteurs à ultrasons.

3. Utilisation d'un rail guide-roue (9 ; 10 ; 13 ; 14) selon l'une quelconque des revendications 1 ou 2, **caractérisée en ce qu'**une ou plusieurs ouvertures de mesure espacées les unes des autres (9e ; 10e ; 13e ; 14e) pour le ou les capteurs de distance (9f ; 11 ; 13f ; 14f) sont prévues dans un flanc guide-roue (9c ; 10c ; 13c ; 14c) tourné vers la zone de conduite (F).

4. Utilisation d'un rail guide-roue (9 ; 10 ; 13 ; 14) selon la revendication 3, **caractérisée en ce que** les ouvertures de mesure (9e ; 10e ; 13e ; 14e) sont réalisées pour maintenir le ou les capteurs de distance (9f ; 11 ; 13f ; 14f).

5. Utilisation d'un rail guide-roue (9 ; 10 ; 13 ; 14) selon l'une quelconque des revendications 3 ou 4, **caractérisée en ce qu'**un revêtement (12) en matière plastique ou en gomme dure est disposé sur le flanc guide-roue (10c), sachant que le revêtement présente une ou plusieurs ouvertures espacées les unes des autres, alignées avec les ouvertures de mesure (10e) du flanc guide-roue (10c).

6. Utilisation d'un rail guide-roue (9 ; 13) selon l'une quelconque des revendications 1 à 5, **caractérisée en ce que** le rail guide-roue (9 ; 13) est formé à partir d'un matériau à profilé creux allongé ou à partir d'un matériau plein (16) en matière plastique ou en caoutchouc.

7. Utilisation d'un rail guide-roue selon la revendication 6, **caractérisée en ce que** le matériau plein (16) est renforcé côté sol et au niveau d'un flanc de machine (14d) faisant face au flanc guide roue (14c) avec un longeron (15) coudé, en particulier en forme de L.

8. Utilisation d'un rail guide-roue (9 ; 10 ; 13 ; 14) selon l'une quelconque des revendications 3 à 7, **caractérisée en ce qu'**une extrémité supérieure du flanc guide-roue (9c ; 10c ; 13c 14c) est réalisée de telle manière que ledit flanc guide-roue est incliné à distance de la zone de conduite lorsque le rail guide-roue (9 ; 10 ; 13 ; 14) est monté.

9. Utilisation d'un rail guide-roue (9 ; 10 ; 13 ; 14) selon l'une quelconque des revendications précédentes, **caractérisée en ce que** le capteur de distance (9f ; 11 ; 13f ; 14f) au moins au nombre de un est abaissé dans le rail guide-roue (9 ; 10 ; 13 ; 14).

10. Installation de lavage de véhicule comportant des dispositifs de traitement (1, 1', 3, 3') pouvant être déplacés le long d'un sens de marche (F) pour un véhicule à traiter, une paire de rails guide-roue (10, 10') au niveau du sol de l'installation de lavage (B) s'étendant entre les dispositifs de traitement (1, 1', 3, 3') dans le sens de la marche (F) et disposés de manière espacée les uns des autres transversalement par rapport au sens de la marche (F), lesquels rails guide-roue délimitent latéralement une zone de conduite (4) pour le véhicule, **caractérisée en ce que** les rails guide-roue (10, 10') sont réalisés comme le rail guide-roue (9 ; 10 ; 13 ; 14) utilisé dans l'une quelconque des revendications 1 à 9.

11. Procédé servant à positionner de manière centrée un véhicule dans une zone de conduite (4) d'une installation de lavage de véhicule selon la revendication 10, **caractérisé par** les étapes suivantes consistant à :
a) mesurer des deux côtés la distance entre les rails guide-roue (10, 10') et les roues et/ou côtés de véhicule pendant l'entrée du véhicule dans la zone de conduite (4),
b) comparer une distance de mesure gauche mesurée par le rail guide-roue (18) gauche à une distance de mesure droite mesurée par le rail guide-roue (18') droit,
c) délivrer une première indication de correction d'orientation, lorsque la distance de mesure à droite est plus grande que la distance de mesure à gauche, ou
d) délivrer une deuxième indication de correction d'orientation, lorsque la distance de mesure à gauche est plus grande que la distance de mesure à droite.

12. Procédé selon la revendication 11, **caractérisé en ce qu'**aucune indication de correction d'orientation et/ou une indication d'orientation est délivrée à l'étape c) ou à l'étape d) dans le cas d'une différence entre la distance de mesure à droite et la distance de mesure à gauche qui est inférieure à une plage de tolérance prédéfinie.

13. Procédé selon la revendication 11 ou 12, **caractérisé en ce que** les distances entre les rails de guide-roue (10, 10') et les roues et/ou les côtés de véhicule sont mesurées par les capteurs de distance dans les rails guide-roue (10, 10').

14. Procédé selon l'une quelconque des revendications 11 à 13, **caractérisé en ce qu'**une position longitudinale (L) du véhicule est déterminée à partir des distances de mesure, et/ou **en ce que** une position de véhicule est déterminée dans la zone de conduite (4), et la position de véhicule et une position souhaitée (P*) du véhicule sont indiquées l'une par rapport à l'autre.

15. Procédé selon la revendication 14, **caractérisé en ce qu'**un signal pour poursuivre l'avancée est émis, lorsque le véhicule n'a pas encore atteint une position longitudinale (L*) souhaitée, et/ou **en ce qu'**un signal d'arrêt est émis, lorsque le véhicule a atteint la position longitudinale (L*) souhaitée, et/ou **en ce qu'**un signal de marche arrière est émis, lorsque le véhicule a dépassé la position longitudinale (L*) souhaitée.
